# EUROPEAN PATENT APPLICATION

(11) **EP 1 082 987 A1**
(43) Date of publication of application: **14.03.2001**
(21) Application number: 00870193.0
(22) Date of filing: 08.09.2000
(51) Int. Cl.: B01D 21/24, C02F 3/12

(54) **Floating decanting device for water treatment plants**

(30) Priority: 08.09.1999 BE 9900600
(71) Applicant: Aquasystems International N.V., 1500 Halle (BE)
(72) Inventor: Haegeman, Johny Hector, 1500 Halle (BE)
(74) Representative: Overath, Philippe

(57) **Abstract**

The decanting device mainly consists of a float (1) and a decanting container (2, 20) with an open upper side, which is provided with an overflow rim (22), and at its lower part with a drain (3).

According to the invention, the float (1) surrounds completely the overflow rim (22) of the decanting container (2, 20) and the decanting container (2, 20) has guiding means allowing the decanting container (2, 20) to move vertically with respect to the float (1) between a first position in which the decanting container (2, 20) is in an "hydraulically closed "position with the overflow rim (22) fully above water, and a second position in which the decanting container (2, 20) is in a "hydraulically open" position with the overflow rim (22) located under the water level whereby the water can flow over the overflow rim (22) into the decanting container (2, 20).

The decanting container is equipped on its outer surface with a closing element (5) allowing to close the passage between the decanting container and the float when the decanting container is in the closed position.

## Description

This invention relates to a floating decanting device for water treatment plants whereby the clear supernatant water needs to be separated from the decanted active sludge.

That separation is made by means of a floating decanting device, which mainly consists of a decanting container, mounted on a float; usually the decanting container is a reversed cone with an open top. The top rim enables overflow of the supernatant water; on the bottom of the decanting container, there is a pipe to drain the clear water.

There are a number of variants of floating decanting devices; but their functioning is always based on the same principles:
- the decanting container is mounted on a float to follow the changing water level with constant immersion;
- the flow of the device is determined by the length and the immersion depth of the overflow rim (assuming the diameter of the drain is large enough);
- the speed of the incoming water must not be too high to prevent that the decanted sludge would get mixed with the upper layer, due to the induced turbulence and water flow accelerations;

While designing a floating decanting device, attention must thus be paid to prevent the impurities or other floatable material surrounding the device to be sucked along, and special care must be taken to avoid the build-up of floatable material between the float and the decanting container.

On the other hand, one should avoid that active sludge, which might still be in suspension in the water outside the device, should be aspirated with the supernatant water.

A frequently occurring problem with floating decanting devices is that during the mixing and/or aeration phase of the treatment process, the active sludge enters the cone of the decanting container and mixes with the supernatant water.

To solve that problem, at the beginning of the discharge phase, a limited quantity of water may be returned to the entrance of the water treatment plant. However, this procedure requires additional valves, control means and ducts.

Another solution is to make sure that the overflow rim of the decanting container is completely separated from the surrounding water, during the mixing and/or aeration phase, so that no active sludge may enter the container.

According to the state of the art, this has been realised so far by closing the in-flow opening with a separately driven mechanism.

US Patent 4.695.376 discloses a decanting device with floating overflow whereby, after separation of the supernatant water, the opening between the float and the overflow rim is closed by means of an actuator. A possible problem is that a strange objet be blocked between the rim and the float, which would consequently allow sludge to enter the decanter device during the aeration phase. Additionally, such an actuator is rather expensive.

US Patent 5.358.644 discloses an overflow whereby the opening between the overflow rim and the float is closed by pressing the upper part of the rim against the bottom part of the float.

This design does not prevent impurities or other floatables to enter or block the opening in closed position, and thus allowing sludge to enter the decanter device during the aeration phase.

One more problem of most systems that use gravity to drain the purified water, is the fact that the drain connection to the basin side is deep under water. If the device needs to be taken out from the water, or if the drain is damaged and leaks, the complete basin must be emptied to disconnect the flange, or a diver must try to perform the necessary repair in an un-transparent layer of active sludge.

The purpose of the invention is to offer a simple and efficient solution of the problems mentioned above,
- whereby the device comprises a float acting as a baffle, preventing direct aspiration of impurities and other floatable material;
- whereby the device includes a closing element distinct from the overflow rim but connected as such with the decanting container, that when the device is in an hydraulically closed position, the overflow rim is situated above the water level;
- whereby the overflow rim of the device can be equipped with the necessary means to allow the device to be closed at any level.

For that purpose, a decanting device will be proposed with the essential elements as defined in the annexed claims.

The process according to the present invention includes the steps as defined in the annexed claims.

The invention is further described by way of non limited embodiments outlined in the accompanying drawings, whereby:
Figure 1 is a cross section of a decanting device of which the decanting container is in such a position that its inside is connected with the water in the basin, and that the water is evacuated by means of siphoning.
Figure 2 shows a sectional view similar to the one in Figure 1, but with the inside of the decanting container fully cut-off from the water in the basin.
Figures 3 and 4 show the functioning of the decanting device according to Figures 1 and 2.
Figure 5 shows a cross section of another embodiment of a decanting container according to the invention; whereby the inside of the decanting container is connected with the water in the basin, and water is drained by gravity.
Figure 6 shows a section similar to the one in Figure 5, but here the inside of the decanting container is fully cut-off from the water in the basin.
Figures 7 and 8 show the functioning of the decanting container according to Figures 5 and 6.

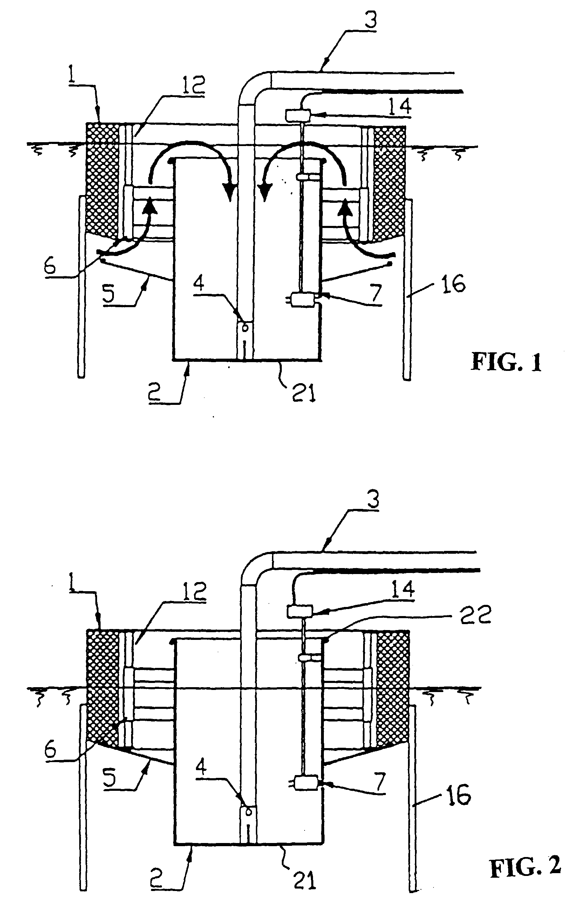

As shown in figures 1 and 2, the decanting device mainly consists of a float 1 in which a decanting container 2 is mounted.

This version has a cylindrical decanting container with a closed bottom 21 and an open top with an overflow rim 22.

A drain 3 extends as far as the bottom 21 of container 2, and is fixed there by means of a hinge 4.

According to the invention, the decanting container 2 is movably fixed to the float 1 by means of a guiding mechanism such as guiding sleeves 6, that are part of the decanting container 2, which can move vertically along rods or tubes 12 that are part of float 1, or vice versa.

Also in the invention, the decanting container 2 has, on its outer side, a closing element such as a conical plate 5; while decanting container 2 is moving upwards, said closing element 5 fits close against the lower surface of the float 1, such as to fully obstruct passage of water to the space between float 1 and the decanting container 2. The closing element 5 will further deflect the upcoming impurities in the water away from the decanting device and outside the float 1.

Between the closing element 5 and the bottom of float 1, a rising rim may be installed on which a rubber ring may be fitted to close as tightly as possible.

The decanting container 2 has also an inlet valve 7, controlled by a control mean 14 provided on the upper side of the float 1. Said valve 7 enables the filling up of the decanting container 2 with water at the appropriate moment when the decanting container 2 is positioned in the upper (closed) position.

The floating decanting device can also be equipped with legs 16 mounted to the outside of float 1.

As shown on the decanter position described by Figure 1, water from the basin 18 flows between the lower side of the float 1 and the closing element 5 towards the space between the float 1 and the decanting container 2; then the water can flow into the decanting container 2, over the overflow rim 22.

In Figure 2, decanting container 2 is in a position whereby closing element 5 fully fits to the bottom of the float 1; the inlet of the water to the space between the float 1 and the decanting container 2 is closed; the water level is below the overflow rim 22 of the container 2 and cannot flow into the decanting container 2.

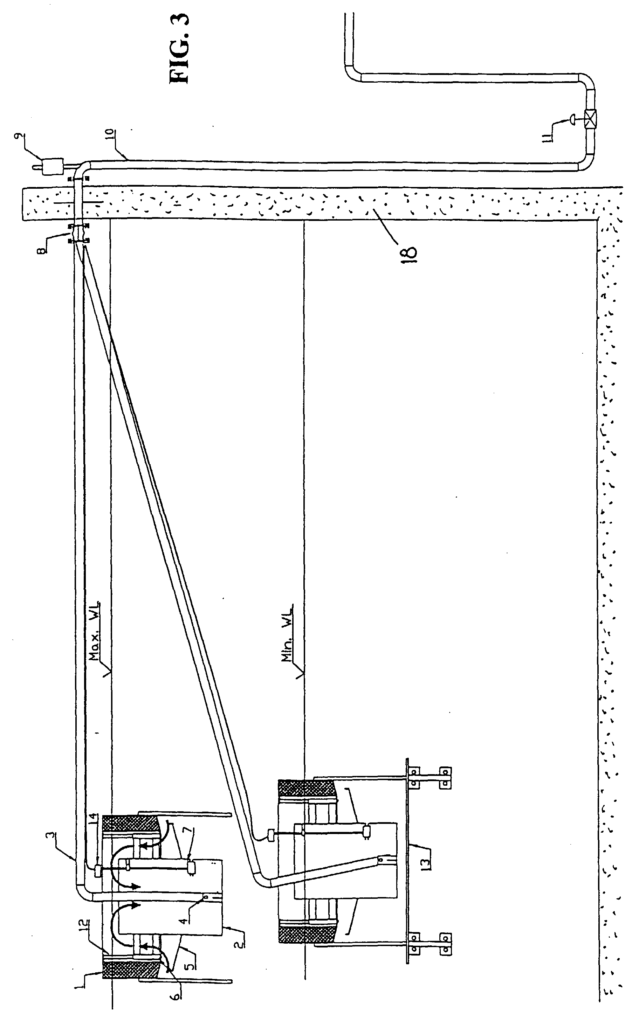

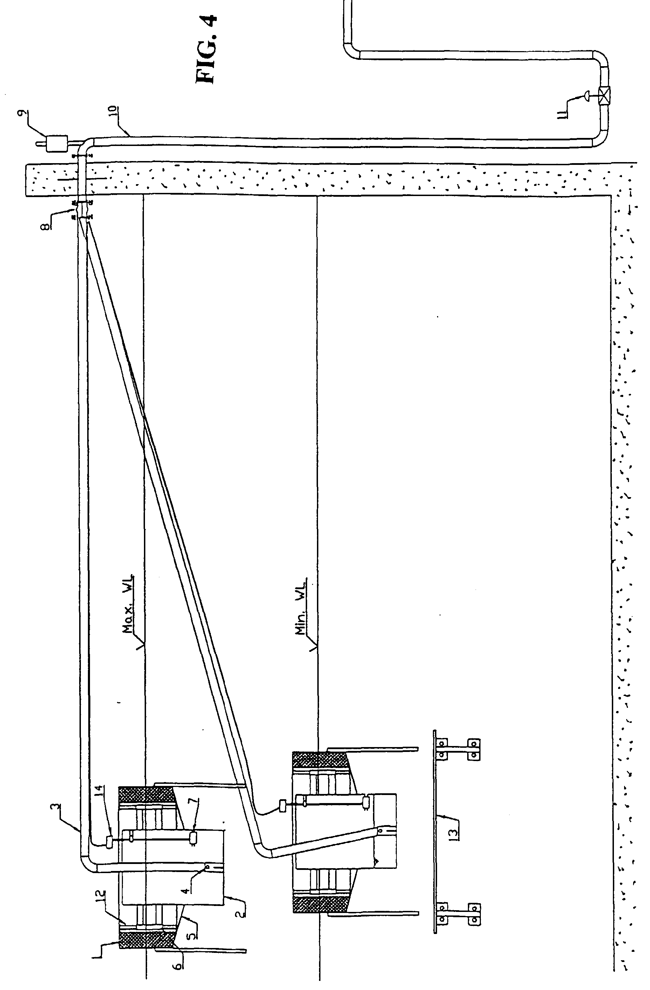

The functioning principle of this embodiment of the decanting device according to the invention will be explained by means of Figures 3 and 4.

Drain 3, connected to the bottom of decanting container 2 by means of a hinge 4, extends to the edge of basin 18; there it is connected by means of an flexible link 8 with the suction duct 10, having an expansion vessel 9 and a valve 11.

The decanting device is put into the water and the drain 3 is connected to the flexible link 8. At that moment, the upper side of the overflow rim 22 of the decanting container 2 is situated above the water level as shown in Figure 4. This is the so-called "hydraulically closed position", since the water cannot enter into the decanting container 2.

To start the device, valve 7 will be opened by the control mean 14 and water will flow into decanting container 2. Due to the increased weight of the decanting container 2, the latter will move downwards by gravity along the guides 6 and 12; the closing element 5 will move away from the lower surface of the float 1 and the water will flow freely towards the space between the float 1 and the decanting container 2. This is the so-called "hydraulically open position" of the decanting device, since container 2 is now fully immersed, as shown in Figure 3 on the top portion.

Valve 7 will then be closed, and the air will be removed from drain 3 and duct 10 through the expansion vessel 9 and completely filled with water by means of a vacuum pump (not shown).

Valve 11 can now be opened so that the drain 3, combined with duct 10 will act as a siphon allowing the water to flow from the decanting container 2 to the outside of basin 18.

The water level in basin 18 will slowly descend; when the desired minimum level is reached (position shown in Figure 3, on the bottom portion), the vertical descending movement of the decanting device can be stopped by a support 13, or by legs 16.

It is clear that the descending movement of the device can also be stopped by using any other element mounted for this purpose on the decanting device, such as, for example, baffles or deflectors mounted in the vicinity of the overflow rim and actuated by any suitable control means. Such means can reduce the flow of water into the decanting container so that the inflow capacity becomes smaller than the discharge capacity through the drain, and consequently the decanting container will empty and thus the device automatically will position itself in the "hydraulically closed position".

Since the device cannot descend any lower, when stopped by the support 13 or by the legs 16, the decanting container 2 will be emptied by the siphoning action through the drain 3 and duct 10. Consequently, the decanting device will become lighter and the rim of the decanting container 2 will finally position above the water level.

The closing element 5 then will return against the bottom of the float 1 to close access of the water, and will bring the device into the "hydraulically closed position" (as below in Figure 4).

The water level in basin 18 will rise again until the maximum level is reached (as above in Figure 4).

After the settling phase of the next water treatment cycle in the basin, the valve 7 can be opened again and the entire operation cycle of the decanter device can start over again.

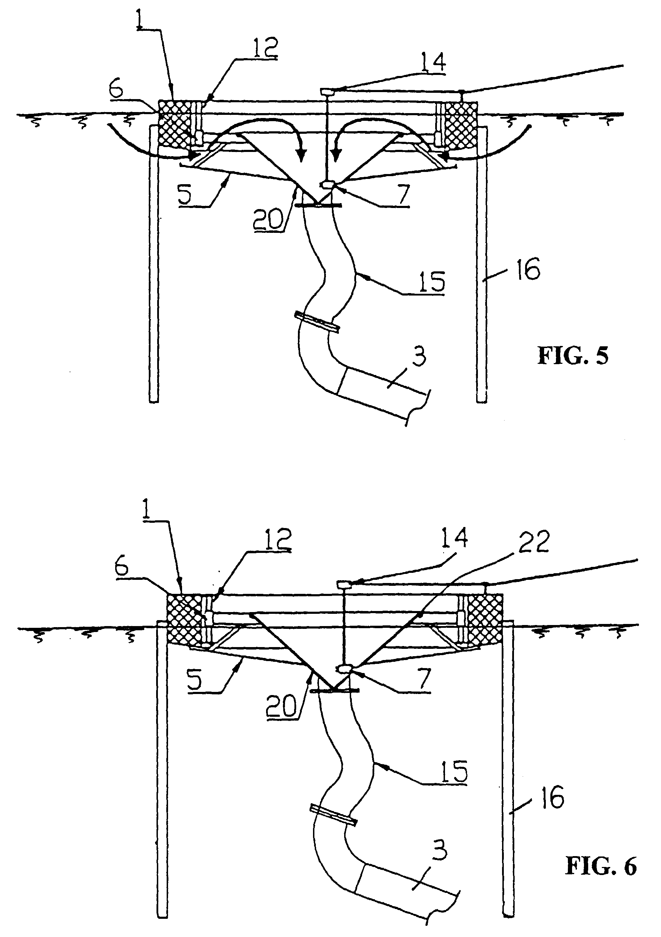

Another version of the decanting device according to the invention is shown in Figures 5 and 6.

The similar parts are indicated by the same references as in Figures 1 and 2.

In this version, the purified water flows from the bottom of the decanting container 20 to the edge of the basin. The decanting container 20 of this embodiment is shaped as a funnel; it can move vertically along the guiding sleeves 6 and guiding tubes 12 with reference to the float 1, so that the overflow rim 22 will be either above or below the water level.

The decanting container 20 is also provided with a closing element 5 which, in the upper position, fits against the lower surface of the float 1 so as to completely close the water access.

Drain 3 is connected to the lower part of the conical decanting container 20 by means of a flexible connection 15.

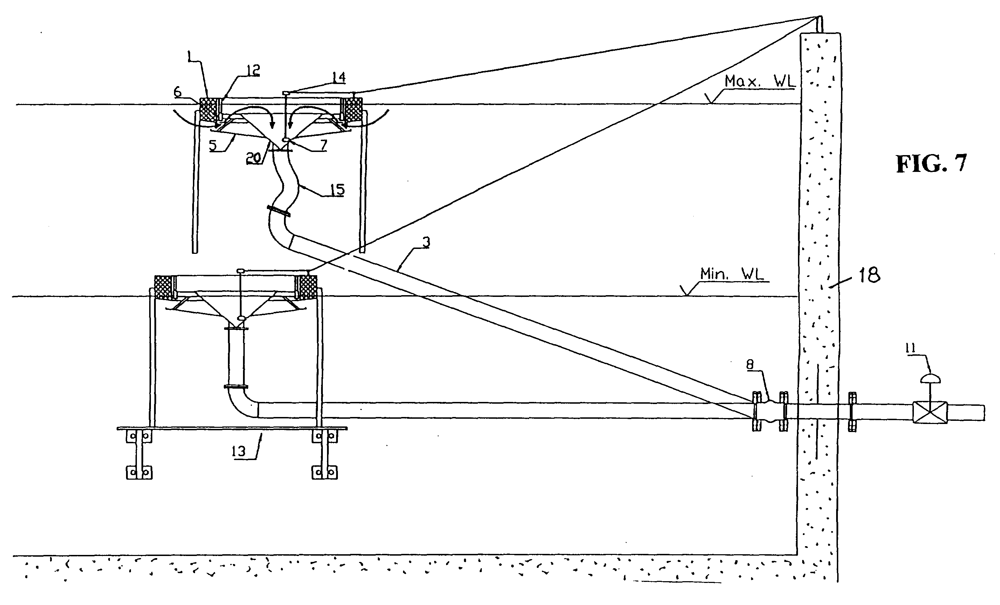

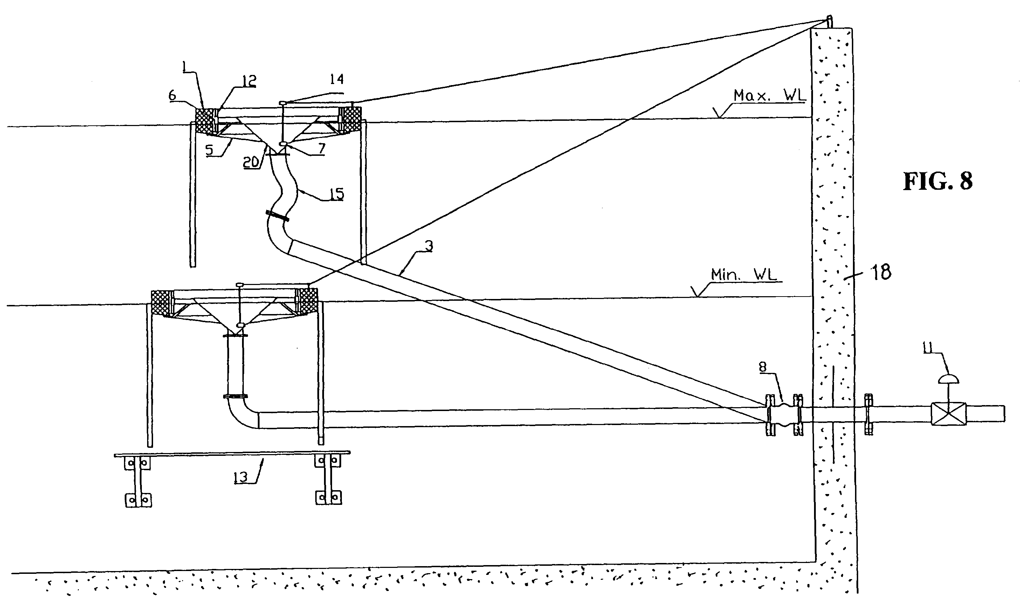

The functioning principle of this version is as follows, with reference to Figures 7 and 8.

The decanting device is put into the water and the drain 3 is attached between the flexible connection 15 of the conical container 20 and the flexible connection 8 of the basin 18. The overflow rim 22 of the decanting container 20 is positioned above the water level and the device is hence in the "hydraulically closed position", since no water can enter into the conical decanting container 20 (as shown in the upper portion of the Figure 8).

To start the operation of the device, the valve 7 is opened by control 14; the incoming water makes the decanting container 20 heavier and it will descend; the closing element 5 will move downwards, away from the float 1, and will let clear supernatant water flow towards the space between the float 1 and the decanting container 20. The decanting container 20 is now fully immersed and the decanting device is in the "hydraulically open position" (as above in Figure 7).

Valve 7 is closed and valve 11 can now be opened so as to evacuate the water from the decanting container 20 by gravity.

When the minimum water level in the basin is reached, the vertical descending movement of the device will be stopped by means of support 13.

Since the device cannot descend any further, the decanting container 20 and the drain 3 will be emptied so as to lighten the decanting container 20 and move it upwards until finally the overflow rim positions above the water level. At that point, the closing element 5 will fit against the lower surface of the float 1 and shut the passage between the float 1 and the decanting container 20.

The decanting device is now again in the "hydraulically closed position" and the water level in the basin 18 can rise again to the maximum level.

After a subsequent mixing, aeration and settling process, the valve 7 can be opened again and the entire cycle can start over.

The time needed for a full water treatment cycle can be subdivided into 20% mixing, 60% aeration, 10% settling, and 10% draining through the decanter device. Said cycle must, of course, be adapted according to the composition of the wastewater, the size of the basin, and the power of the mixer/aerator.

A further advantage of the device according to the present invention is that the closing element 5 ensures that the space between the float 1 and the decanting container 2 contains no floating substances, in particular during the period that the water is mixed and/or aerated.

## Claims

1. Floating decanting device for a water treatment plant, mainly consisting of a float (1) and a decanting container (2, 20), with at the open upper side an overflow rim (22), and at the bottom side a drain (3), whereby the container (2, 20) is movable vertically with respect to the float (1) between a first position (container in "hydraulically closed position") with the overflow rim (22) fully cut-off from water, and a second position (container in "hydraulically open position) with the overflow rim (22) located under the water level whereby the water can flow over the overflow rim (22) into the decanting container (2, 20) ,
characterised in that,
the float (1) surrounds completely the overflow rim (22) of the decanting container (2, 20) and in that the decanting container (2, 20) is equipped on its outer surface with a closing element (5) allowing to close the passage between the decanting container (2, 20) and the float (1) when the decanting device is in its hydraulically closed position.

2. Floating decanting device according to claim 1, characterised in that, the decanting container (2, 20) is connected to the float (1) by guiding means (6, 12) allowing the container (2, 20) to move vertically with respect to the float (1).

3. Floating decanting device according to claim 1, characterised in that, the closing element (5) is conical shaped to deflect the upcoming impurities in the water away from the decanting device.

4. Floating decanting device according to claim 1, characterised in that, the decanting container (2, 20) is provided with an inlet valve (7) to fill the container (2, 20) with water when the device needs to be shifted from the hydraulically closed to the hydraulically open position.

5. Floating decanting device according to claim 1, characterised in that, the decanting container (2) is provided on its lower inner side with a drain (3) which is attached by means of a hinge (4), and allowing the siphoning of the water out of the decanting container (2).

6. Floating decanting device according to claim 1, characterised in that the decanting container (20) is provided with a drain (3) allowing discharge of water by means of gravity.

7. Floating decanting device according to claim 1, characterised in that, the decanting container (2, 20) is provided with means, such as a support, legs, baffles or deflectors, in order to stop the descending movement of the device.

8. Process to collect clean supernatant water, by means of a decanting device according to claims 1 tot 7, characterised by the following steps:
- the decanting device is put in its first "hydraulically closed" position in a basin (18) whereby the decanting container (2) is empty, its overflow rim is situated above the water level, and the access of the water to the decanting container is cut-off by the closing element;
- the inlet valve (7) is opened to allow water to flow into the decanting container (2, 20);
- due to the increasing weight, the decanting container (2, 20) moves vertically downwards, and the closing element (5) separates from the lower side of the float (1); the water can then enter the passage between the decanting container (2, 20) and the float (1) and overflow the rim into the decanting container (2, 20)
- in this second "hydraulically open" position, the water can be drained or sucked away from the decanting container (2, 20);
- due to the lowering water level in the basin (18), the decanting device will also descend until the minimum water level is reached;
- at the minimum water level, the inlet flow will be reduced, and consequently the water volume in the decanting container (2, 20) will also be reduced, the device will become lighter and will move upward until the overflow rim (22) is located above the water level and the closing element (5) touches the lower surface of the float (1) so as to cut-off the water access to the device and to put the device in a "hydraulically closed" position;
- since no more water is drained anymore, the water level in the basin can increase again and the treatment cycle can start all over again.
